(19) **Europäisches Patentamt / European Patent Office / Office européen des brevets**

(11) **EP 3 316 216 B1**

(12) **EUROPÄISCHE PATENTSCHRIFT**

(45) Veröffentlichungstag und Bekanntmachung des Hinweises auf die Patenterteilung:
**29.01.2020 Patentblatt 2020/05**

(51) Int Cl.:
**G06T 7/00** *(2017.01)*

(21) Anmeldenummer: **17195613.9**

(22) Anmeldetag: **10.10.2017**

(54) **VERFAHREN ZUM PRÜFEN EINES GEGENSTANDS**

METHOD FOR CHECKING AN OBJECT

PROCÉDÉ DE VÉRIFICATION D'UN OBJET

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **28.10.2016 AT 509902016**

(43) Veröffentlichungstag der Anmeldung:
**02.05.2018 Patentblatt 2018/18**

(73) Patentinhaber: **AIT Austrian Institute of Technology GmbH**
**1220 Wien (AT)**

(72) Erfinder: **Penz, Harald**
**1120 Wien (AT)**

(74) Vertreter: **Wildhack & Jellinek**
**Patentanwälte**
**Landstraßer Hauptstraße 50**
**1030 Wien (AT)**

(56) Entgegenhaltungen:
**US-A- 5 586 058      US-A1- 2007 098 248**
**US-A1- 2008 130 982      US-B1- 6 721 461**

**Beschreibung**

Die Erfindung betrifft Verfahren zur Prüfung von Gegenständen, das insbesondere auf dem pixelweisen Vergleich zweier Bilder bzw. dem Vergleich eines Gegenstandsbilds mit einem oder mehreren Referenzbildern basiert.

In der Industrie gewinnt die automatische Qualitätskontrolle - z.B. im Druckbereich oder bei der Oberflächeninspektion - immer mehr an Bedeutung. Dazu wird der zu prüfende Gegenstand unter kontrollierten Bedingungen, typischerweise mit vorgegebener Ausrichtung und Beleuchtung, mit einem Aufnahmesystem, wie insbesondere einer Kamera oder einem Scanner, aufgenommen und mit einer Anzahl von Referenzbildern vergleichen, die aus einer Referenzbildmenge T entnommen sind. Diese Referenzbildmenge T umfasst ein oder mehrere Referenzbilder. Das bzw. jedes Referenzbild wird entweder durch eine künstlich erstellte Vorlage oder eine Aufnahme eines für gut befundenen Referenzgegenstands festgelegt. Vorzugsweise wird dafür das selbe Aufnahmesystem verwendet.

Die US 2008/130982 A1 offenbart ein Verfahren und eine Vorrichtung zur Kontrolle von feinen Mustern von beispielsweise Halbleiterschaltungen, bei denen ein Referenzmuster aus den für die Herstellung des zu untersuchenden Musters herangezogen Daten und eine Aufnahme des zu untersuchenden Musters erstellt und anschließend vergleichen werden. Die US 6721461 B1 zeigt ein Verfahren und eine Vorrichtung zur Umsetzung dynamischer Schwellenwerttechniken bei Bild-Subtraktionsprozessen im Rahmen von automatisierter optischer Qualitätskontrolle. Die US 5586058 A offenbart eine Vorrichtung und ein Verfahren zur Oberflächeninspektion bei denen aufeinanderfolgend verschiedene Repräsentationen desselben Untersuchungsobjekts hinsichtlich feiner bzw. ultrafeiner Defekte untersucht werden.

Aus dem Stand der Technik ist es bekannt, dass das Gegenstandsbild vor dem Vergleich mit dem Referenzbild helligkeitsnormiert wird und auf das Referenzbild bildregistriert wird, d.h. so verzerrt bzw. entzerrt wird, dass es besser mit dem Referenzbild übereinstimmt. Trotzdem ist bei den aus dem Stand der Technik bekannten Vergleichsverfahren mit gravierenden Unterschieden zwischen dem angepassten Gegenstandsbild und dem Referenzbild zu rechnen, die nicht als fehlerhafte Abweichungen bewertet, sondern toleriert werden sollen.

Diese an sich vernachlässigbaren Unterschiede kommen zum einen davon, dass die Bildregistrierung nicht perfekt ist. Zum anderen gibt es regelmäßig unvermeidliche Unterschiede in der Bildschärfe zwischen dem Referenzbild und dem Gegenstandsbild. Die Bildschärfeunterschiede werden durch das Aufnahmesystem verursacht und entstehen auch bei der Bildregistrierung, wenn Pixel interpoliert werden müssen.

Die aus dem Stand der Technik bekannte Verwendung eines Differenzbilds durch pixelweise Differenzbildung zwischen einem Referenzbild und einem allenfalls entzerrten Gegenstandsbild, ist daher nicht zufriedenstellend.

Die Aufgabe der Erfindung ist es daher, ein Verfahren bereitzustellen, das verbesserte Ergebnisse liefert und insbesondere nur echte Abweichungen detektiert, die von tatsächlichen Abweichungen des Gegenstands von einem durch das Referenzbild vorgegebenen Soll herrühren; solche Abweichungen sind beispielsweise verursacht durch Kratzer oder Verschmutzungen am Gegenstand. Kleine Bildregistrierungsfehler und Bildschärfeunterschiede sollen hingegen toleriert werden.

Die Erfindung löst die Aufgabe durch Erstellung von zumindest einem Fehlerbild gemäß dem Verfahren zur Prüfen eines Gegenstands mit den Merkmalen des Patentanspruchs 1. Dabei ist vorgesehen, dass

a) ein Gegenstandsbild erstellt wird, das eine Abbildung des Gegenstands enthält,

b) zumindest ein Referenzbild vorgegeben wird, das ein Abbild enthält, das mit dem Abbild des Gegenstands auf Übereinstimmung zu prüfen ist,

c) ein Referenz-Maximalbild und/oder ein Referenz-Minimalbild auf Grundlage des zumindest einen Referenzbilds, insbesondere durch pixelweise Bildung des Minimums und/oder Maximums einer Mehrzahl von Referenzbildern gebildet wird, wobei für den Fall, dass nur ein Referenzbild zur Verfügung steht, das Referenz-Maximalbild und/oder das Referenz-Minimalbild dem Referenzbild gleichgesetzt werden/wird,

d) zumindest eines von den folgenden 4 Fehlerbildern auf Grundlage der in Schritt e) zu ermittelnden Bilder ermittelt wird:

- ein erstes Fehlerbild durch pixelweise Subtraktion eines Gegenstands-Dilationsbilds vom einem unteren Referenz-Schrankenbild,

- ein zweites Fehlerbild durch pixelweise Subtraktion eines oberen Referenz-Schrankenbilds von einem Gegenstands-Erosionsbild,

- ein drittes Fehlerbild durch pixelweise Subtraktion eines Referenz-Dilationsbilds von einem unteren Gegenstands-Schrankenbild,

- ein viertes Fehlerbild durch pixelweise Subtraktion eines oberen Gegenstands-Schrankenbild von einem Referenz-Erosionsbild,

e) wobei

- das Referenz-Dilationsbild durch Anwenden eines Referenz-Dilationsfilters auf das obere Referenz-Schrankenbild erzeugt wird,
- das Referenz-Erosionsbild durch Anwenden eines Referenz-Erosionsfilters auf das untere Referenz-Schrankenbild erzeugt wird,
- das Gegenstands-Dilationsbild durch Anwenden eines Gegenstands-Dilationsfilters auf das obere Gegenstands-Schrankenbild erzeugt wird,
- das Gegenstands-Erosionsbild durch Anwenden eines Gegenstands-Erosionsfilters auf das untere Gegenstands-Schrankenbild erzeugt wird,

f) wobei

- das obere Referenz-Schrankenbild durch pixelweise Maximumbildung des Referenz-Maximalbilds und eines oberen Referenz-Glättungsbilds erzeugt wird,
- das untere Referenz-Schrankenbild durch pixelweise Minimumbildung des Referenz-Minimalbilds und eines unteren Referenz-Glättungsbilds erzeugt wird,
- das obere Gegenstands-Schrankenbild festgelegt wird

  - als dem Gegenstandsbild identisch, oder
  - als pixelweises Maximum des Gegenstandsbilds und eines Gegenstands-Glättungsbilds,

- das untere Gegenstands-Schrankenbild festgelegt wird

  - als dem Gegenstandsbild identisch, oder
  - als pixelweises Minimum des Gegenstandbilds und eines Gegenstands-Glättungsbilds,

g) wobei

- das obere Referenz-Glättungsbild durch Anwendung eines Referenz-Glättungsfilters auf das Referenz-Maximalbild gebildet wird,
- das untere Referenz-Glättungsbild durch Anwendung des Referenz-Glättungsfilters auf das Referenz-Minimalbild gebildet wird,
- das Gegenstands-Glättungsbild durch Anwendung eines Gegenstands-Glättungsfilters auf das Gegenstandbild gebildet wird und

h) wobei Bereiche des Gegenstands als potentiell fehlerhaft angesehen werden, wenn sie innerhalb eines vorab festgelegten Bildbereichs oder innerhalb vorab festgelegter Bildbereiche auf solche Bildbereiche eines der ermittelten Fehlerbilder abgebildet werden, in dem der betreffende Fehlerpixelwert einen positiven Wert oder einen einen positiven Schwellenwert überschreitenden Wert aufweist.

Eine einfache Herangehensweise, aufgrund der erstellten Fehlerbilder auf potentiell fehlerhafte Bereiche des Gegenstands zu schließen, sieht vor, dass in Schritt d) zumindest zwei der Fehlerbilder gebildet werden und ein Maximum-Fehlerbild durch pixelweise Maximumbildung der in Schritt d) erstellten Fehlerbilder ermittelt wird, und wobei Bereiche des Gegenstands als potentiell fehlerhaft angesehen werden, wenn sie auf Bildbereiche des Maximum-Fehlerbilds abgebildet werden, in denen die betreffenden Pixelfehlerwerte positive Werte oder einen positiven Schwellenwert überschreitende Werte aufweisen.

Um bei Aufnahmen, bei denen jeweils Bildbereiche, insbesondere Rahmen, mit nicht relevanten Informationen vorhanden sind, Ressourcen und Rechenzeit einzusparen, kann vorgesehen sein, dass für den Vergleich ausschließlich Teilbereiche des Gegenstandsbilds herangezogen werden, die sich insbesondere an vorgegebenen Positionen des Gegenstandsbilds befinden.

Zur Erstellung eines mehrkanaligen Gegenstandsbilds kann vorgesehen sein, dass die ein oder mehrkanaligen Referenzbilder und das ein oder mehrkanalige Gegenstandsbild gebildet wird, indem

- ein Rohbild des Gegenstands ermittelt wird und jeder Bildkanal durch Anwendung einer oder mehrerer der folgenden Operationen auf das Rohbild erstellt wird:

  i) durch Anwendung von Filtern, insbesondere eines Kantenfilters, auf das Rohbild, und/oder

  ii) durch Anwendung von Bildkanal-Mischoperationen auf ein mehrkanaliges Rohbild zur Erstellung eines einkanaligen Bildes.

Zur Überprüfung eines Gegenstands anhand eines mehrkanaligen Gegenstandsbilds kann vorgesehen sein, dass

- die Referenzbilder und das Gegenstandsbild mehrere Kanäle enthalten und für jeden Bildkanal einzeln zumindest eines der folgenden Bilder gemäß Schritt d) und e) aus Anspruch 1 erstellt wird,

  - ein oberes Referenz-Schrankenbild,
  - ein unteres Referenz-Schrankenbild,
  - ein Referenz-Dilationsbild,
  - ein Referenz-Erosionsbild,

- das Gegenstandsbild mehrere Kanäle enthält, und für jeden Bildkanal gemäß Schritt e) und f) aus Anspruch 1 zumindest eines der folgenden Bilder erstellt wird:

  - ein oberes Gegenstands-Schrankenbild,
  - ein unteres Gegenstands-Schrankenbild,
  - ein Gegenstands-Dilationsbild,
  - ein Gegenstands-Erosionsbild,

- wobei für zumindest zwei Kanäle, insbesondere für alle Kanäle, zumindest ein Fehlerbild gemäß Schritt d) erstellt wird, und ein Maximum-Fehlerbild durch pixelweise Maximumbildung der so erstellten Fehlerbilder ermittelt wird.

Eine vorteilhafte Einstellung der Bildschärfe sieht vor, dass insbesondere bei der Bildung der Referenz- und/oder Gegenstands-Glättungsbilder die Umgebungen und/oder die Gewichte der jeweiligen Glättungsfilter so gewählt werden, dass das oder die Referenz-Glättungsbild(er) und das oder die Gegenstands-Glättungsbild(er), im Wesentlichen dieselbe Bildschärfe aufweisen.

Vorteilhaft kann vorgesehen sein, dass für den Fall, dass mehrere Fehlerbilder gebildet werden, die bei der Erstellung von Referenz- und/oder Gegenstands-Erosionsbildern und/oder Referenz- und/oder Gegenstands-Dilationsbildern verwendeten Filter jeweils dieselbe Pixelumgebung aufweisen.

Für große Schärfeunterschiede zwischen Referenzbildern und Gegenstandsbild kann vorgesehen sein,

- dass eine Vielzahl von oberen Referenz-Glättungsbildern durch Anwendung von Referenz-Glättungsfiltern mit unterschiedlicher Glättungsstärke auf das Referenz-Maximalbild erstellt wird und das obere Referenz-Schrankenbild als pixelweises Maximum des Referenz-Maximalbilds und aller oberen Referenz-Glättungsbilder gebildet wird, und/oder
- dass eine Vielzahl von unteren Referenz-Glättungsbildern durch Anwendung von Referenz-Glättungsfiltern mit unterschiedlicher Glättungsstärke auf das Referenz-Minimalbild erstellt wird und das untere Referenz-Schrankenbild als pixelweises Minimum des Referenz-Minimalbilds und aller unteren Referenz-Glättungsbilder gebildet wird.

Um Bildregistrierungsfehler tolerieren zu können, verwendet die Erfindung die Bildoperationen Dilation und/oder Erosion. Um Schärfeunterschiede zu tolerieren oder zu kompensieren werden Glättungsfilter, wie beispielsweise der Gauß-Filter, verwendet.

Die Anwendung eines Dilationsfilters und Erosionsfilters stellen Basisoperationen der morphologischen Bildverarbeitung dar. Dabei werden pixelweise die Maximalwerte (bei Dilation) bzw. Minimalwerte (bei Erosion) innerhalb einer Umgebung, umfassend alle Nachbarpixel sowie das Pixels selbst, gebildet. Die Filtergröße bestimmt, welche Pixel als Nachbar angesehen werden.

Üblich ist es beispielsweise bei einem Digitalbild alle acht unmittelbaren Nachbarpixel, die an das betreffende Pixel horizontal, vertikal oder diagonal angrenzen zur Umgebung zu zählen. Es können aber zusätzlich auch weiter vom betreffenden Pixel entfernt liegende Pixel der Umgebung zugerechnet werden. In diesem Fall ist der vom betreffenden Filter verursachte Ausdehnungseffekt stärker.
Durch, insbesondere lineare, Interpolation zwischen den Ergebnissen zweier Filter mit ganzzahligen Filtergrößen kann eine stufenlose justierbare Filtergröße des Dilations- oder Erosionsfilters erzielt werden.

Glättungsfilter sind Filter, die die Bildschärfe reduzieren. Für gewöhnlich wird dazu pixelweise die gewichtete Summe aller Nachbarpixel gebildet. Die Gewichte sind dabei umso kleiner, je weiter weg die Nachbarpixel von Zentrumspixel liegen. Vorzugsweise wird ein Gauß-Filter als Glättungsfilter verwendet. Der Glättungseffekt kann durch Wahl der Nachbarpixel und der Gewichte stufenlos variiert werden.

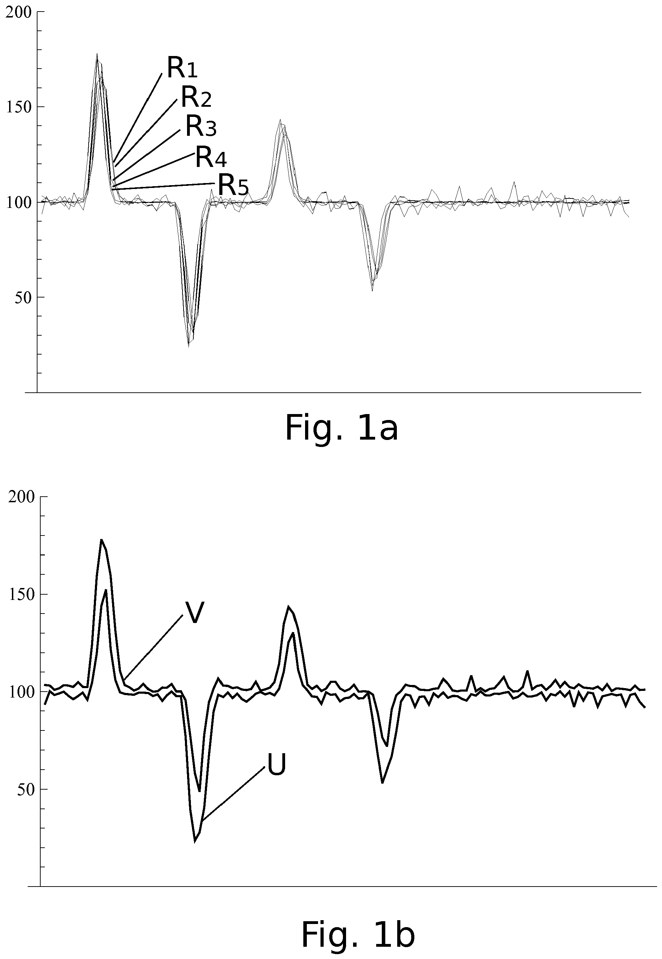

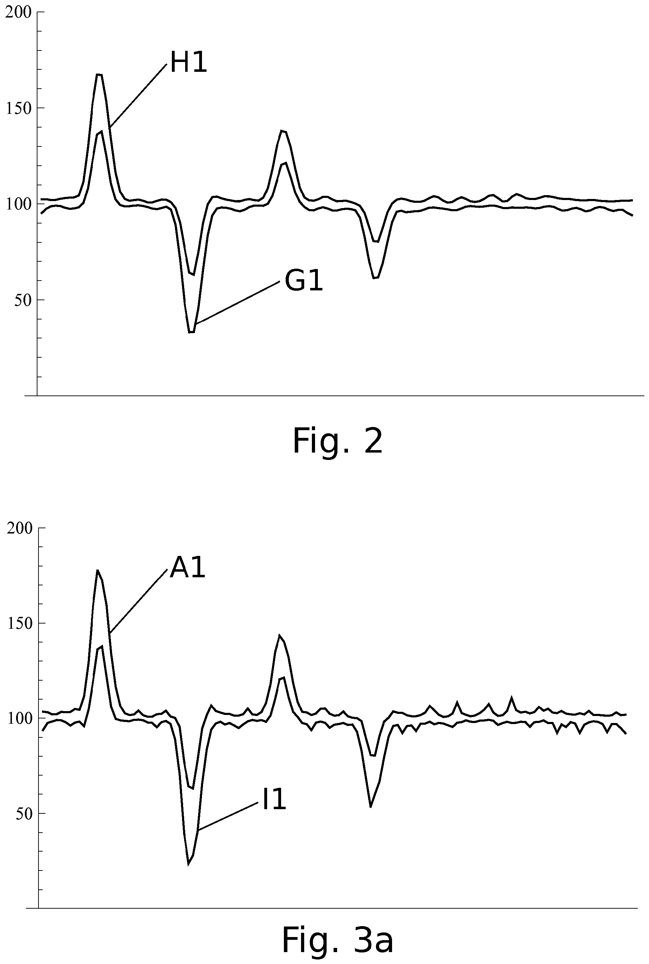

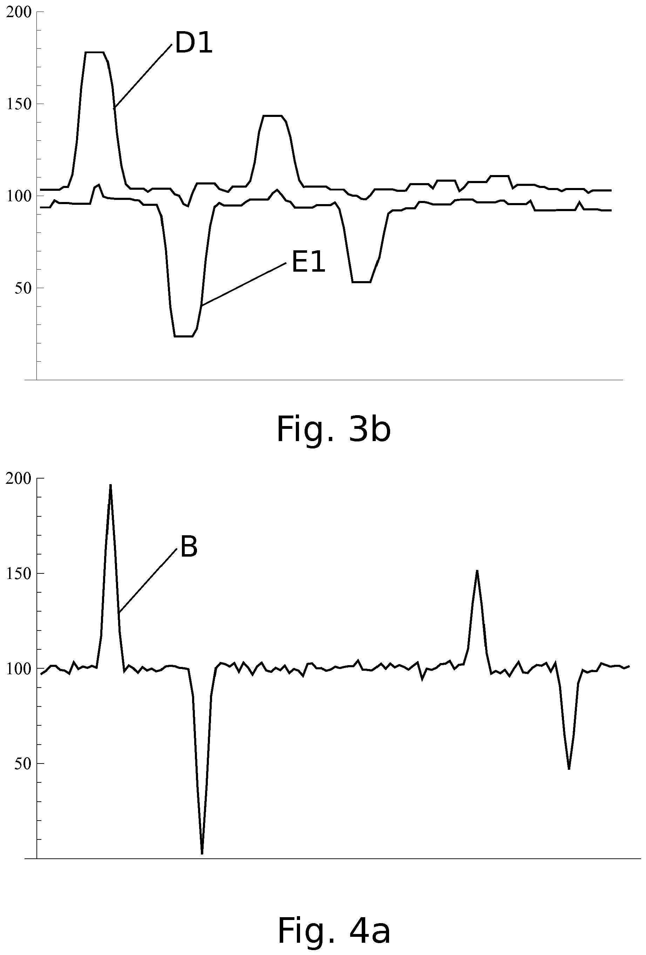

**Fig. 1a** zeigt jeweils eine Zeile einer Anzahl von Referenzbildern ($R_1$, ..., $R_5$) einer Referenzbildmenge T, **Fig. 1b** die betreffende Zeile eines daraus ermittelten Referenz-Minimalbilds U und Referenz-Maximalbilds V. **Fig. 2** zeigt die betreffenden Zeilen eines daraus erstellten oberen Referenz-Glättungsbilds $H_1$ und unteren Referenz-Glättungsbilds $G_1$, **Fig. 3a und 3b** zeigen Zeilen der daraus ermittelten charakteristischen Bilder.

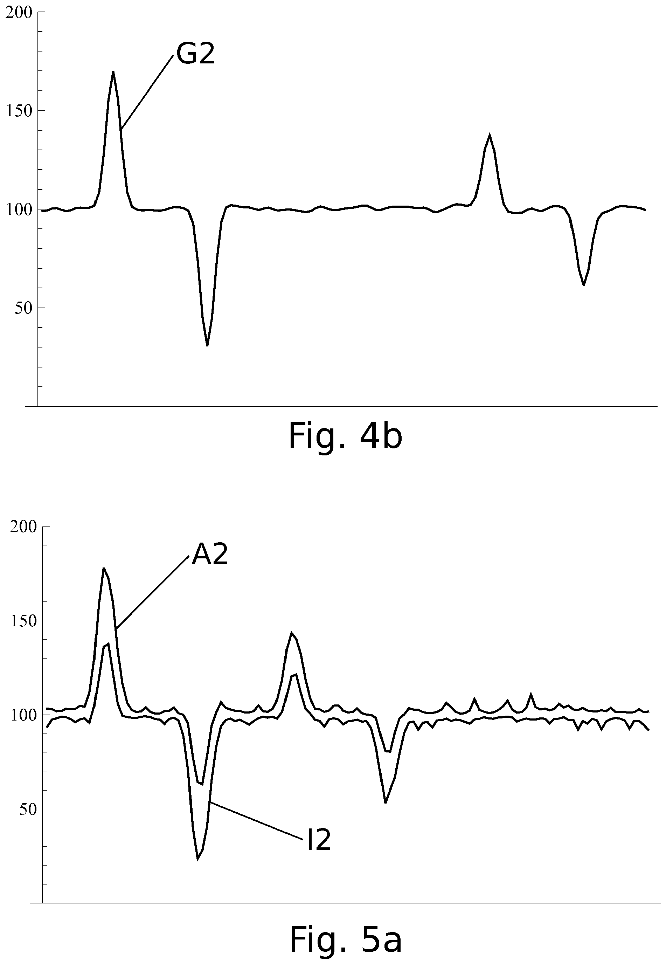

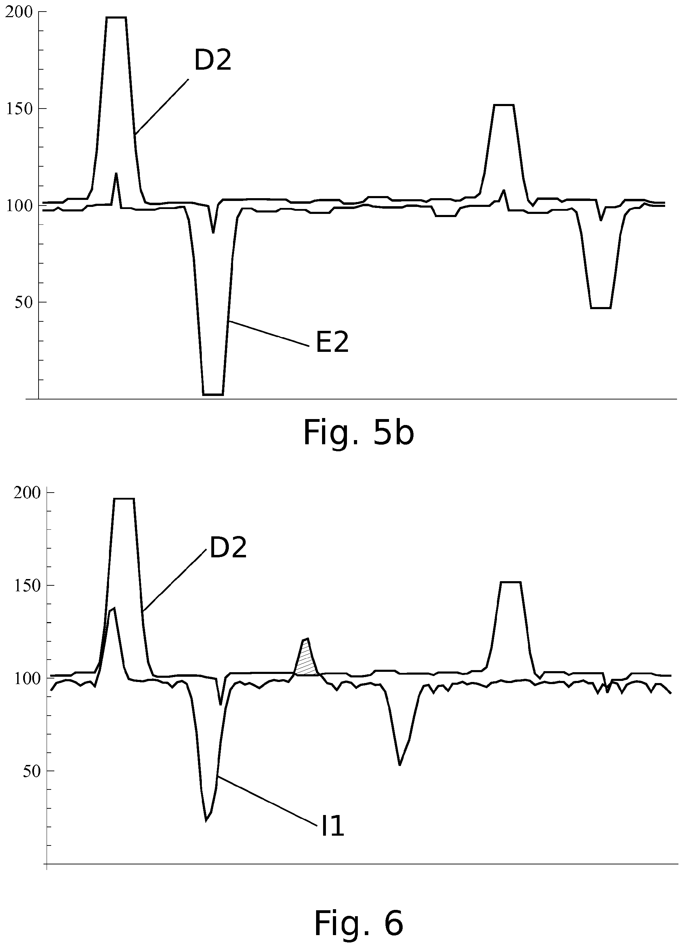

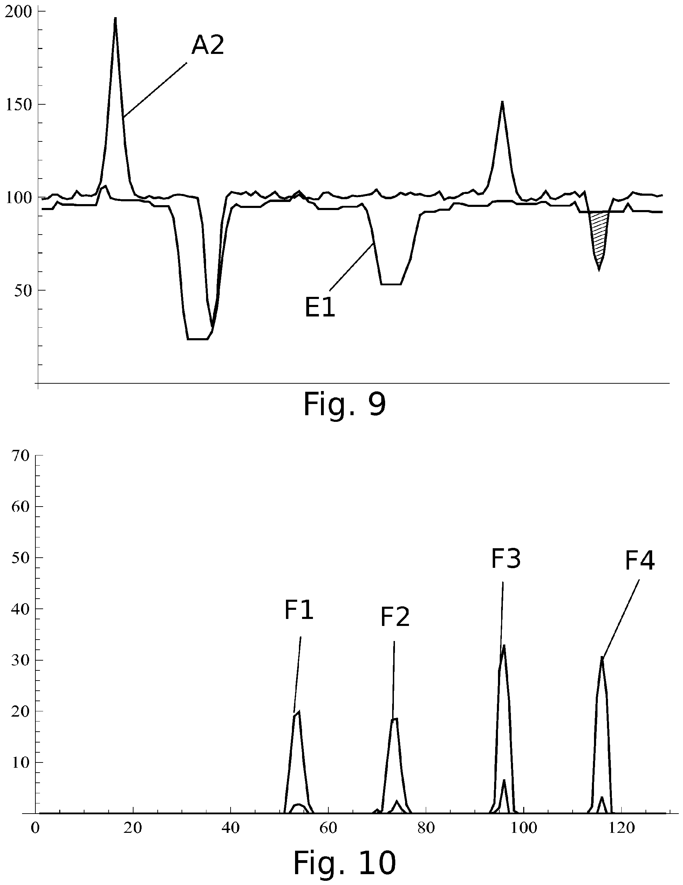

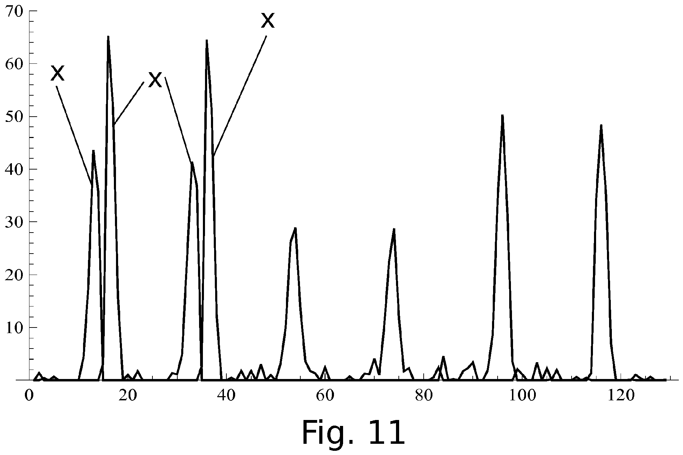

**Fig. 4a** zeigt eine Zeile eines Gegenstandbilds B, **Fig. 4b** zeigt die betreffende Zeile eines Gegenstands-Glättungsbilds $G_2$. **Fig. 5a und 5b** zeigen die betreffenden Zeilen der ermittelten den Gegenstand charakterisierenden Bilder. **Fig. 6 bis 9** zeigen die Erstellung einzelner Fehlerbilder. **Fig. 10** zeigt die jeweils betroffene Zeile der vier Fehlerbilder. **Fig. 11** zeigt zum Vergleich das Ergebnis des dem Stand der Technik bekannten Verfahrens des pixelweisen Vergleichs des Gegenstandsbildes mit dem Referenzbild.

Im Folgenden wird eine erste Ausführungsform der Erfindung näher dargestellt. Dabei wird eine in **Fig. 1a** dargestellte Referenzbildmenge T umfassend eine Mehrzahl von n Referenzbildern $R_1$, ..., $R_n$ vorgegeben.

Basierend auf den Referenzbildern $R_1$, ..., $R_n$ wird ein Referenz-Maximalbild V durch pixelweise Bildung des Maximums der Pixelintensitätswerte gebildet. Jedes Pixel des Referenz-Maximalbilds V erhält als Intensitätswert den maximalen Intensitätswert unter denjenigen Pixeln der Referenzbildern $R_1$, ..., $R_n$, die an der zugehörigen Position innerhalb des jeweiligen Referenzbilds $R_1$, ..., $R_n$ liegen **(Fig. 1b)**.

Weiters wird basierend auf den Referenzbildern $R_1$, ..., $R_n$ ein Referenz-Minimalbild U durch pixelweise Bildung des Minimums der Pixelintensitätswerte gebildet. Jedes Pixel des Referenz-Minimalbilds U erhält als Intensitätswert den minimalen Intensitätswert unter denjenigen Pixeln der Referenzbildern $R_1$, ..., $R_n$, die an der zugehörigen Position innerhalb des jeweiligen Referenzbilds $R_1$, ..., $R_n$ liegen **(Fig. 1b)**.

In weiterer Folge wird, wie in **Fig. 2** dargestellt, ein oberes Referenz-Glättungsbild $H_1$ durch Anwendung eines Referenz-Glättungsfilters $g_1$ auf das Referenz-Maximalbild V gebildet. Im vorliegenden Ausführungsbeispiel wird als Glättungsfilter ein Gauß-Filter verwendet, der eine Varianz von 1,0 aufweist. Genau genommen wird der Glättungsfilter durch einen Binomialfilter mit den Koeffizienten (1, 4, 6, 4, 1) / 16 approximiert, was näherungsweise einem Gaußfilter mit der Varianz 1,0 entspricht.

Weiters wird ein ebenfalls in **Fig. 2** dargestelltes unteres Referenz-Glättungsbild $G_1$ durch Anwendung des Referenz-Glättungsfilters $g_1$ auf das Referenz-Minimalbild U gebildet.

Zum Vergleich mit dem Gegenstandsbild B (**Fig. 4a**) werden aus den Referenzbildern die folgenden charakteristischen Bilder $A_1$, $I_1$, $D_1$, $E_1$ ermittelt, die in **Fig. 3a** und **Fig. 3b** dargestellt sind:

Ein oberes Referenz-Schrankenbild $A_1$ wird als pixelweises Maximum des Referenz-Maximalbilds V und des oberen Referenz-Glättungsbilds $H_1$ ermittelt. Analog dazu wird ein unteres Referenz-Schrankenbild $I_1$ als pixelweises Minimum des Referenz-Minimalbilds U und des unteren Referenz-Glättungsbilds $G_1$ ermittelt (**Fig. 3a**). In weiterer Folge wird ein Referenz-Dilationsbild $D_1$ durch Anwenden eines Referenz-Dilationsfilters $d_1$ auf das obere Referenz-Schrankenbild $A_1$ ermittelt. Schließlich wird ein Referenz-Erosionsbild $E_1$ durch Anwenden eines Referenz-Erosionsfilters $e_1$ auf das untere Referenz-Schrankenbild $I_1$ ermittelt (**Fig. 3b**).

Auf Grundlage eines vom Gegenstand erstellten Gegenstandsbilds B werden die folgenden den Gegenstand charakterisierenden Bilder $A_2$, $I_2$, $D_2$, $E_2$ (**Fig. 4a** und **Fig. 4b**), nach im wesentlichen denselben Kriterien erstellt wie die für die Referenzbilder charakteristischen Bilder $A_1$, $I_1$, $D_1$, $E_1$ (**Fig. 3a** und **Fig. 3b**).

Zunächst wird ein Gegenstands-Glättungsbild $G_2$ (**Fig. 4b**) durch Anwendung eines Gegenstands-Glättungsfilters $g_2$ auf das Gegenstandbild B (**Fig. 4a**) gebildet. Im vorliegenden Ausführungsbeispiel wird als Glättungsfilter ein Gauß-Filter verwendet, der eine Varianz von 1,0 aufweist.

Anschließend wird ein oberes Gegenstands-Schrankenbild $A_2$ ermittelt, das als pixelweises Maximum des Gegenstandsbilds B und des Gegenstands-Glättungsbilds $G_2$ festgelegt wird. Ein unteres Gegenstands-Schrankenbild $I_2$ wird als pixelweises Minimum des Gegenstandbilds B und des Gegenstands-Glättungsbilds $G_2$ festgelegt (**Fig. 5a**).

Weiters wird ein Gegenstands-Dilationsbilds $D_2$ durch Anwenden eines Gegenstands-Dilationsfilters $d_2$ auf das obere Gegenstands-Schrankenbild $A_2$ ermittelt. Schließlich wird ein Gegenstands-Erosionsbilds $E_2$ durch Anwenden eines Gegenstands-Erosionsfilters $e_2$ auf das untere Gegenstands-Schrankenbild $I_2$ ermittelt (**Fig. 5b**).

Nachdem die die Referenzbilder charakterisierenden Bilder $A_1$, $I_1$, $D_1$, $E_1$ sowie die den Gegenstand charakterisierenden Bilder $A_2$, $I_2$, $D_2$, $E_2$ ermittelt sind, werden diese auf erfindungsgemäß festgelegte Art paarweise verglichen.

Ein erstes Fehlerbild $F_1$ wird durch pixelweise Subtraktion des Gegenstands-Dilationsbilds $D_2$ vom unteren Referenz-Schrankenbild $I_1$ ermittelt. Für jedes Pixel an der Bildposition mit den Koordinaten x, y wird ein Pixelfehlerwert $F_1[x, y]$ wie folgt festgelegt.

$$F_1[x, y] = I_1[x, y] - D_2[x, y]$$

**Fig. 6** zeigt eine Gegenüberstellung des Gegenstands-Dilationsbilds $D_2$ und des unteren Referenz-Schrankenbilds $I_1$. Bereiche, in denen das erste Fehlerbild $F_1$ positive Werte aufweist, sind schraffiert dargestellt.

Ein zweites Fehlerbild $F_2$ wird durch pixelweise Subtraktion des oberen Referenz-Schrankenbilds $A_1$ vom Gegenstands-Erosionsbild $E_2$ ermittelt. Für jedes Pixel an der Bildposition mit den Koordinaten x, y wird ein Pixelfehlerwert $F_2[x, y]$ wie folgt festgelegt.

$$F_2[x, y] = E_2[x, y] - A_1[x, y]$$

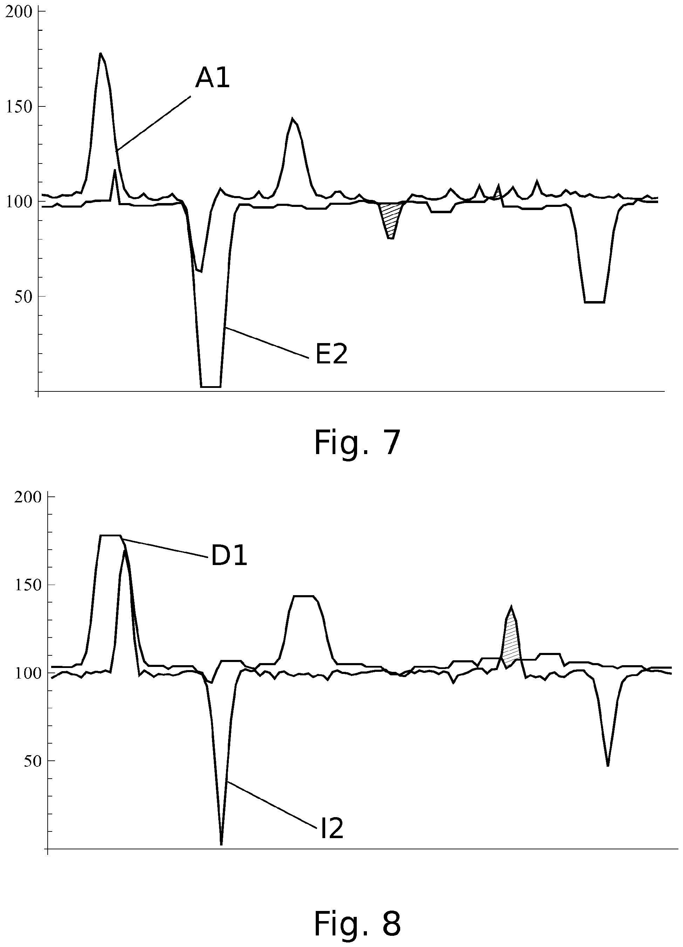

**Fig. 7** zeigt eine Gegenüberstellung des Gegenstands-Erosionsbild $E_2$ und des oberen Referenz-Schrankenbilds $A_1$. Bereiche, in denen das zweite Fehlerbild $F_2$ positive Werte aufweist, sind schraffiert dargestellt.

Ein drittes Fehlerbild $F_3$ wird durch pixelweise Subtraktion des Referenz-Dilationsbilds $D_1$ vom unteren Gegenstands-Schrankenbild $I_2$ ermittelt. Für jedes Pixel an der Bildposition mit den Koordinaten x, y wird ein Pixelfehlerwert $F_3[x, y]$ wie folgt festgelegt.

$$F_3[x, y] = I_2[x, y] - D_1[x, y]$$

**Fig. 8** zeigt eine Gegenüberstellung des unteren Gegenstands-Schrankenbilds $I_2$ und des Referenz-Dilationsbilds $D_1$. Bereiche, in denen das dritte Fehlerbild $F_3$ positive Werte aufweist, sind schraffiert dargestellt.

Ein viertes Fehlerbild $F_4$ wird durch pixelweise Subtraktion des oberen Gegenstands-Schrankenbilds $A_2$ vom Referenz-Erosionsbild $E_1$ ermittelt. Für jedes Pixel an der Bildposition mit den Koordinaten x, y wird ein Pixelfehlerwert $F_4[x, y]$ wie folgt festgelegt.

$$F_4[x, y] = E_1[x, y] - A_2[x, y]$$

**Fig. 9** zeigt eine Gegenüberstellung des oberen Gegenstands-Schrankenbilds $A_2$ und des Referenz-Erosionsbilds $E_1$. Bereiche, in denen das vierte Fehlerbild $F_4$ positive Werte aufweist, sind schraffiert dargestellt.

In **Fig. 6 bis 9** sind diejenigen Bereiche der Fehlerbilder, in denen der betreffende Pixelwert des zugehörigen Fehlerbilds einen positiven Wert aufweist, schraffiert dargestellt. Im vorliegenden Fall deuten positive Werte im Fehlerbild F auf fehlerhafte Abweichungen f hin, die nicht durch kleine Bildregistrierungsfehler oder Schärfeunterschiede zu erklären sind. Der Gegenstand wird in denjenigen Bereichen als fehlerhaft angesehen, die auf Bildbereiche zumindest eines Fehlerbilds abgebildet werden, in denen die betreffenden Pixelfehlerwerte positive Werte aufweisen. In dem vorstehend genannten Beispiel werden die einzelnen Werte des Fehlerbilds F mit dem Wert 0 als Schwellenwert verglichen. Davon abweichend kann aber auch vorgesehen sein, dass ein Schwellenwertvergleich mit einem alternativen Wert, insbesondere einem positiven Wert, erfolgt.

Werden, wie im vorliegenden Fall mehrere Fehlerbilder $F_1$, ..., $F_4$ gebildet, so kann aus diesen Fehlerbildern $F_1$, ..., $F_4$ ein Maximum-Fehlerbild $F_{max}$ durch pixelweise Maximumbildung der erstellten Fehlerbilder $F_1$, ..., $F_4$ ermittelt werden (**Fig. 10**). Jeder Pixelfehlerwert des Maximum-Fehlerbilds $F_{max}$ an einer vorgegebenen Bildposition entspricht dem maximalen Pixelfehlerwert der an der jeweils entsprechenden Bildposition in den Fehlerbildern $F_1$, ..., $F_4$ liegenden Pixel. Im vorliegenden Fall mit vier Fehlerbildern $F_1$, ..., $F_4$ kann das Maximum-Fehlerbild $F_{max}$ mittels der folgenden Vorschrift ermittelt werden:

$$F_{max}[x, y] = \max\{F_1[x, y], F_2[x, y], F_3[x, y], F_4[x, y]\}$$

Der Gegenstand wird in diesem Fall in denjenigen Bereichen als fehlerhaft angesehen, die auf Bildbereiche des Maximum-Fehlerbilds $F_{max}$ abgebildet werden, in dem der betreffende Pixelfehlerwert $F_{max}[x, y]$ einen positiven Wert oder einen einen positiven Schwellenwert überschreitenden Wert aufweist.

Im einfachsten Fall einer Qualitätsbeurteilung werden die Bereiche des Gegenstands als fehlerhaft erkannt, die auf Bildbereiche zumindest eines Fehlerbilds abgebildet werden, in dem der betreffende Pixelfehlerwert einen positiven Wert oder einen einen positiven Schwellenwert überschreitenden Wert aufweist. Insbesondere kann auch der gesamte Gegenstand als mangel- bzw. fehlerhaft erkannt werden, wenn ein einziger Pixelfehlerwert den Schwellwert überschreitet.

Selbstverständlich können aber auch komplexere Auswertungsmethoden verwendet werden. So kann z.B. pixelweise ein Toleranzwert vom Fehlerbild F subtrahiert werden, um kleine Abweichungen, die z.B. schon wegen Kamerarauschen unvermeidlich sind, zu akzeptieren. Danach können verbleibende positive Pixel im Fehlerbild F, die in unmittelbarer Nachbarschaft zueinander liegen, zu Gruppen zusammengefasst werden (connected-component labeling). Jede so erkannte Pixelgruppe kann dann einzeln bewertet werden. Beispielsweise kann die Summe der zur Pixelgruppe gehörigen Pixelwerte berechnet und mit einem Schwellwert verglichen werden.

In einem zweiten Ausführungsbeispiel, das im Übrigen dem ersten Ausführungsbeispiel entspricht, kann anstelle einer Referenzbildmenge T auch nur ein einziges Referenzbild R aufweisen. In diesem Fall werden das Referenz-Maximalbild V und das Referenz-Minimalbild U auf denselben Wert gesetzt und sind identisch mit dem Referenzbild R. In diesem Fall wird das einzige Referenzbild R denselben Schritten unterzogen wie das Gegenstandsbild B; das Verfahren ist letztlich ein Bild-zu-Bild-Vergleich.

Die Dilationsfilter $d_1$ und $d_2$ sowie Erosionsfilter $e_1$ und $e_2$ verwenden zur Ermittlung des Filterwerts vorzugsweise dieselbe Nachbarschaft von Pixeln. In allen vorher genannten Ausführungsbeispielen können ohne Kenntnis über die Art der Herstellung der Bilder, dh ohne Kontextwissen, vorzugsweise auch dieselben Glättungsfilter $g_1 = g_2$ verwendet werden.

Kontextwissen kann aber in die geeignete Wahl der Filtergrößen einfließen. Wenn beispielsweise bekannt ist, dass das Referenzbild R oder die Referenzbilder $R_1$, ..., $R_n$ keine von einem Aufnahmesystem erstellten Bilder sind, sondern von einem Computer erstellt wurden und über maximale Bildschärfe verfügen, dann kann davon ausgegangen werden, dass das Gegenstandsbild B an keiner Stelle schärfer ist als dieses Referenzbild R bzw. diese Referenzbilder $R_1$, ..., $R_n$. Demzufolge kann man für den Gegenstands-Glättungsfilter $g_2$, den man auf das Gegenstandsbild B anwendet die Größe 0 verwenden bzw. kann dieser Glättungsvorgang unterbleiben. Die Filtergröße des auf das Referenzbild R angewendeten Referenz-Glättungsfilters $g_1$ wird dagegen so groß gewählt, sodass das Referenzbild R und das Gegenstandsbild B im Wesentlichen dieselbe Bildschärfe aufweisen.

Im Allgemeinen wird man danach streben, die Glättungsfilter $g_1$ und $g_2$ so groß zu wählen, dass erlaubte bzw. unvermeidliche Unterschiede in der Bildschärfe gerade noch toleriert werden. Bei einer vorteilhaften Weiterbildung der Erfindung kann es günstig sein, nicht nur einen Referenz-Glättungsfilter $g_1$ auf das Referenzbild R oder die Referenzbilder $R_1$, ..., $R_n$ anzuwenden, sondern eine Anzahl I von Referenz-Glättungsfiltern $g_{1,1}$, ..., $g_{1,I}$ mit jeweils unterschiedlicher Filtergröße.

Dabei wird eine Anzahl von I oberen Referenz-Glättungsbildern ($H_{1,1}$, ..., $H_{1,I}$) durch Anwendung der Referenz-Glättungsfiltern $g_{1,1}$, ..., $g_{1,I}$ mit unterschiedlicher Glättungsstärke auf das Referenz-Maximalbild V erstellt. Das obere Referenz-Schrankenbild ($A_1$) wird als pixelweises Maximum des Referenz-Maximalbilds V und aller oberen Referenz-Glättungsbilder $H_{1,1}$, ..., $H_{1,I}$ gebildet.

Auf dieselbe Weise kann dieselbe Anzahl I von unteren Referenz-Glättungsbildern $G_{1,1}$, ..., $G_{1,I}$ durch Anwendung der Referenz-Glättungsfiltern $g_{1,1}$, ..., $g_{1,I}$ mit unterschiedlicher Glättungsstärke auf das Referenz-Minimalbild U erstellt werden. Das untere Referenz-Schrankenbild $I_1$ wird als pixelweises Minimum des Referenz-Minimalbilds U und aller unteren Referenz-Glättungsbilder $G_{1,1}$, ..., $G_{1,I}$ gebildet.

Eine vorteilhafte Einstellung der Bildschärfe sieht vor, dass bei der Bildung der Referenz- und/oder Gegenstands-Glättungsbilder die Umgebungen und/oder die Gewichte des jeweiligen Glättungsfilters so gewählt werden, dass zwischen dem oder den Referenz-Glättungsbild(ern) und dem oder den Gegenstands-Glättungsbild(ern), die zu erwartenden und/oder die zu tolerierenden Schärfeunterschiede ausgeglichen werden. Der Glättungsfilter für die Referenz-Glättungsbilder wird daher vorzugsweise so gewählt, dass in den Referenz-Glättungsbildern die Bildschärfe so stark reduziert wird, dass die minimal zu erwartende und/oder zu tolerierende Bildschärfe der Gegenstandsbilder erreicht wird. Der Glättungsfilter für die Gegenstand-Glättungsbilder wird vorzugsweise so gewählt, dass in den Gegenstands-Glättungsbildern die Bildschärfe so stark reduziert wird, dass auch bei maximal zu erwartender und/oder die zu tolerierender Bildschärfe der Gegenstandsbilder die minimale Bildschärfe der Referenzbilder erreicht wird.

In den vorhergehenden Ausführungsbeispielen wurden jeweils insgesamt vier Fehlerbilder $F_1$, ..., $F_4$ erstellt. Aber auch eine weniger anspruchsvolle Prüfung, mit der nur einzelne, bestimmte Fehler gefunden werden, ist in bestimmten Fällen ausreichend zur zuverlässigen Erkennung von Fehlern in Gegenständen. Da in diesem Fall einzelne Bildverarbeitungsoperationen zur Erzeugung der nicht benötigten Fehlerbilder nicht durchgeführt werden brauchen, kann das Verfahren demensprechend schneller unter Verwendung von geringeren Computerressourcen durchgeführt werden.

Es kann auch vorgesehen sein, nicht das ganze Bild zu prüfen, sondern nur Teilbereiche davon. Üblicherweise werden vom Gegenstandsbild B nur jene Bildteile geprüft, die den Gegenstand bzw. die zu prüfenden Teile davon darstellen. Hintergrundpixel werden ausgelassen. Alternativ kann man natürlich auch alle Pixel prüfen und die Hintergrundpixel erst im betreffenden Fehlerbild F ausblenden.

Bei dem Gegenstandsbild B kann es sich um ein von einer Bildaufnahmeeinheit unmittelbar erstelltes Rohbild handeln. Alternativ kann das Gegenstandsbild B auch von einem Rohbild des Gegenstands durch Anwendung von Filtern und/oder Mischoperationen auf Bildkanäle, insbesondere Farbmischungsoperationen auf Farbkanäle, gebildet werden. Bei der Erstellung eines Gegenstandsbilds kann eine Vielzahl unterschiedlicher Bearbeitungsprozesse auf das betreffende Rohbild angewendet werden.

Auch wenn die Erfindung bislang nur für die Anwendung auf einen einzelnen Bildkanal beschrieben wurde, ist es ohne weiteres möglich, eine Vielzahl (m) unterschiedlicher vom Rohbild abgeleiteter Bildkanäle zu erstellen, wobei jeder der m Bildkanäle jeweils auf eine unterschiedliche Weise erstellt wurde. Ebenso ist es möglich, für das oder die Referenzbilder jeweils mehrere, insbesondere dieselbe Anzahl m, Bildkanäle zur Verfügung zu stellen, wobei jeweils für jeden Bildkanal ein separater Vergleich durchgeführt und jeweils separate Fehlerbilder ($F_{1,1}$, ..., $F_{4,1}$; ...; $F_{1,m}$, ..., $F_{4,m}$) erstellt werden.

Die einfachste Möglichkeit, bei der die Bilder mehrere Kanäle aufweisen, besteht darin, dass sowohl als Gegenstandsbilder als auch als Referenzbilder jeweils Farbbilder mit einer Anzahl von Farbkanälen zur Verfügung gestellt werden. Die obigen Bildverarbeitungsoperationen können somit auch auf Farbbilder angewendet werden. Es kann eines der vorstehend beschriebenen Verfahren auf jeden Farbkanal einzeln angewendet werden. Abschließend kann man die pro Farbkanal entstehenden Fehlerbilder beispielsweise durch pixelweise Maximumsbildung oder pixelweise Addition zu einem gemeinsamen Fehlerbild $F_{max}$ kombinieren.

Darüber hinaus können zusätzlich oder stattdessen aus den Gegenstandsbildern bzw. den Referenzbildern Feature-Bilder erstellt werden, die anschließend auf Übereinstimmung geprüft werden. So kann beispielsweise aus einem Gegenstandsbild und/oder einem Referenzbild jeweils ein Kantenbild erzeugt werden; alternativ besteht auch die Möglichkeit, dass aus einem mehrkanaligen Bild als Merkmal eine bestimmte Linearkombination der Farbkanäle gewählt wird und derart ein Bildkanal eines Gegenstandsbilds bzw. Referenzbilds gebildet wird.

Die einzelnen Bildkanäle können vorteilhaft gebildet werden durch die, insbesondere mehrfache, Durchführung der folgenden Schritte:

i) die Anwendung eines Filters, insbesondere eines Kantenfilters, auf das Rohbild, und/oder

ii) die Anwendung von Mischoperationen auf ein mehrkanaliges.

In diesen Fällen werden die Fehlerbilder jeweils kanalweise bestimmt, wobei für jeden Bildkanal eines oder mehrere der vorstehend genannten Fehlerbilder ermittelt werden können. Die Fehlerbilder aller Kanäle werden durch pixelweise Maximumsbildung oder pixelweise Addition zu einem gemeinsamen Fehlerbild $F_{max}$ kombiniert.

Wenn das Verfahren bei gleichbleibendem Referenzbild oder gleichbleibenden Referenzbildern auf mehrere Gegenstände bzw. die zugehörigen Gegenstandsbilder B angewendet werden soll, dann empfiehlt es sich, alle oder zumindest die aufwändigsten Rechenoperationen, die auf die Referenzbilder angewendet werden, vorab nur einmal auszuführen und die betreffenden Ergebnisse, insbesondere ein unteres Referenz-Schrankenbild $I_1$, ein oberes Referenz-Schrankenbild $A_1$, ein Referenz-Dilationsbild $D_1$ und/oder ein Referenz-Erosionsbild $E_1$ zu speichern und bei Bedarf zu laden.

So wie in den vorstehend genannten Figuren jeweils auf eine Zeile oder eine Spalte eines zweidimensionalen Bilds Bezug genommen wurde, eignet sich das Verfahren auch für den Vergleich eindimensionaler Daten, insbesondere einzelner Bildzeilen. Darüber hinaus kann das Verfahren auch auf mehrdimensionale Daten, zB 3D-Daten eines Computertomographen, angewendet werden.

Vorzugsweise haben alle vorstehend genannten Bilder dieselben Abmessungen, dh dieselbe Anzahl von Zeilen und Spalten. Sofern nur einzelne Teilbereiche der Bilder für die dargestellten Berechnungsschritte verwendet werden, sind diese Teilbereiche der Bilder vorzugsweise gleich groß.

Die Vorteile des erfindungsgemäßen Verfahrens gegenüber dem Stand der Technik sind aus **Fig. 11** ersichtlich. Dargestellt sind die Beträge, um die das Gegenstandbild B das Referenz-Minimalbild U unter bzw. das Referenz-Maximalbild V überschreitet. Hier wird klar, dass die geringe Verschiebung des Gegenstandsbilds B zum Referenzbild R zur Detektion erheblicher Bildfehler X führt, denen kein Fehler des zu untersuchenden Gegenstands zu Grunde liegt.

**Patentansprüche**

1. Verfahren zum Prüfen eines Gegenstands,

a) wobei ein Gegenstandsbild (B) erstellt wird, das eine Abbildung des Gegenstands enthält,
b) wobei zumindest ein Referenzbild (R; $R_1$, ..., $R_n$) vorgegeben wird, das ein Abbild enthält, das mit dem Abbild des Gegenstands auf Übereinstimmung zu prüfen ist,
c) wobei ein Referenz-Maximalbild (V) und/oder ein Referenz-Minimalbild (U) auf Grundlage des zumindest einen Referenzbilds (R), insbesondere durch pixelweise Bildung des Minimums und/oder Maximums einer Mehrzahl von Referenzbildern ($R_1$, ..., $R_n$) gebildet wird, wobei für den Fall, dass nur ein Referenzbild (R) zur Verfügung steht, das Referenz-Maximalbild (V) und/oder das Referenz-Minimalbild (U) dem Referenzbild (R) gleichgesetzt werden/wird,
**dadurch gekennzeichnet,**
d) **dass** zumindest eines der folgenden Fehlerbilder ($F_1$, ..., $F_4$) auf Grundlage der in Schritt e) zu ermittelnden Bilder ermittelt wird:

- ein erstes Fehlerbild ($F_1 = I_1 - D_2$) durch pixelweise Subtraktion eines Gegenstands-Dilationsbilds ($D_2$) von einem unteren Referenz-Schrankenbild ($I_1$),
- ein zweites Fehlerbild ($F_2 = E_2 - A_1$) durch pixelweise Subtraktion eines oberen Referenz-Schrankenbilds ($A_1$) von einem Gegenstands-Erosionsbild ($E_2$),
- ein drittes Fehlerbild ($F_3 = I_2 - D_1$) durch pixelweise Subtraktion eines Referenz-Dilationsbilds ($D_1$) von einem unteren Gegenstands-Schrankenbild ($I_2$),
- ein viertes Fehlerbild ($F_4 = E_1 - A_2$) durch pixelweise Subtraktion eines oberen Gegenstands-Schrankenbilds ($A_2$) von einem Referenz-Erosionsbild ($E_1$), und

e) wobei

- das Referenz-Dilationsbild ($D_1$) durch Anwenden eines Referenz-Dilationsfilters ($d_1$) auf das obere Referenz-Schrankenbild ($A_1$) erzeugt wird,
- das Referenz-Erosionsbild ($E_1$) durch Anwenden eines Referenz-Erosionsfilters ($e_1$) auf das untere Referenz-Schrankenbild ($I_1$) erzeugt wird,
- das Gegenstands-Dilationsbild ($D_2$) durch Anwenden eines Gegenstands-Dilationsfilters ($d_2$) auf das obere Gegenstands-Schrankenbild ($A_2$) erzeugt wird,
- das Gegenstands-Erosionsbild ($E_2$) durch Anwenden eines Gegenstands-Erosionsfilters ($e_2$) auf das untere Gegenstands-Schrankenbild ($I_2$) erzeugt wird,

f) wobei

- das obere Referenz-Schrankenbild ($A_1$) als pixelweises Maximum des Referenz-Maximalbilds (V) und eines oberen Referenz-Glättungsbilds ($H_1$) erstellt wird,
- das untere Referenz-Schrankenbild ($I_1$) als pixelweises Minimum des Referenz-Minimalbilds (U) und eines unteren Referenz-Glättungsbilds ($G_1$) erstellt wird,
- das obere Gegenstands-Schrankenbild ($A_2$) festgelegt wird

    - als dem Gegenstandsbild (B) identisch, oder
    - als pixelweises Maximum des Gegenstandsbilds (B) und eines Gegenstands-Glättungsbilds ($G_2$),

- das untere Gegenstands-Schrankenbild ($I_2$) festgelegt wird

    - als dem Gegenstandsbild (B) identisch, oder
    - als pixelweises Minimum des Gegenstandbilds (B) und eines Gegenstands-Glättungsbilds ($G_2$),

g) wobei

- das obere Referenz-Glättungsbild ($H_1$) durch Anwendung eines Referenz-Glättungsfilters ($g_1$) auf das Referenz-Maximalbild (V) gebildet wird,
- das untere Referenz-Glättungsbild ($G_1$) durch Anwendung des Referenz-Glättungsfilters ($g_1$) auf das Referenz-Minimalbild (U) gebildet wird,
- das Gegenstands-Glättungsbild ($G_2$) durch Anwendung eines Gegenstands-Glättungsfilters ($g_2$) auf das Gegenstandbild (B) gebildet wird und

h) wobei Bereiche des Gegenstands als potentiell fehlerhaft angesehen werden, wenn sie auf solche Bildbereiche eines der ermittelten Fehlerbilder ($F_1$, ..., $F_4$) abgebildet werden, in dem der betreffende Pixelfehlerwert einen positiven Wert oder einen einen positiven Schwellenwert überschreitenden Wert aufweist.

2. Verfahren nach Anspruch 1, wobei in Schritt d) zumindest zwei der Fehlerbilder ($F_1$, ..., $F_4$) gebildet werden und ein Maximum-Fehlerbild ($F_{max}$) durch pixelweise Maximumbildung der in Schritt d) erstellten Fehlerbilder ($F_1$, ..., $F_4$) ermittelt wird, und wobei Bereiche des Gegenstands als potentiell fehlerhaft angesehen werden, wenn sie auf Bildbereiche des Maximum-Fehlerbilds ($F_{max}$) abgebildet werden, in denen die betreffenden Pixelfehlerwerte einen positiven Wert oder einen einen positiven Schwellenwert überschreitenden Wert aufweisen.

3. Verfahren nach Anspruch 1 oder 2, wobei für den Vergleich ausschließlich Teilbereiche des Gegenstandsbilds (B) herangezogen werden, die sich insbesondere an vorgegebenen Positionen des Gegenstandsbilds (B) befinden.

**4.** Verfahren nach einem der Ansprüche 1 bis 3, wobei die ein oder mehrkanaligen Referenzbilder ($R_1$, ..., $R_n$) und das ein oder mehrkanalige Gegenstandsbild (B) gebildet wird, indem

- ein Rohbild des Gegenstands ermittelt wird und jeder Bildkanal durch Anwendung einer oder mehrerer der folgenden Operationen auf das Rohbild erstellt wird:

i) durch Anwendung von Filtern, insbesondere eines Kantenfilters, auf das Rohbild, und/oder
ii) durch Anwendung von Bildkanal-Mischoperationen auf ein mehrkanaliges Rohbild zur Erstellung eines einkanaligen Bildes.

**5.** Verfahren nach Anspruch 4, wobei

- die Referenzbilder ($R_1$, ..., $R_n$) und das Gegenstandsbild (B) mehrere Kanäle (m) enthalten und für jeden Bildkanal (i) einzeln zumindest eines der folgenden Bilder gemäß Schritt d) und e) aus Anspruch 1 erstellt wird,

- ein oberes Referenz-Schrankenbild ($A_{1,i}$),
- ein unteres Referenz-Schrankenbild ($I_{1,i}$),
- ein Referenz-Dilationsbild ($D_{1,i}$),
- ein Referenz-Erosionsbild ($E_{1,i}$),

- das Gegenstandsbild (B) mehrere Kanäle (m) enthält, und für jeden Bildkanal (i) gemäß Schritt f) aus Anspruch 1 zumindest eines der folgenden Bilder erstellt wird:

- ein oberes Gegenstands-Schrankenbild ($A_{2,i}$),
- ein unteres Gegenstands-Schrankenbild ($I_{2,i}$),
- ein Gegenstands-Dilationsbild ($D_{2,i}$),
- ein Gegenstands-Erosionsbild ($E_{2,i}$),

- wobei für zumindest zwei Kanäle, insbesondere für alle Kanäle, zumindest ein Fehlerbild ($F_{1,1}$, ..., $F_{4,1}$; ...; $F_{1,m}$, ..., $F_{4,m}$) gemäß Schritt g) erstellt wird, und ein Maximum-Fehlerbild ($F_{max}$) durch pixelweise Maximumbildung der so erstellten Fehlerbilder ($F_{1,1}$, ..., $F_{4,1}$; ...; $F_{1,m}$, ..., $F_{4,m}$) ermittelt wird.

**6.** Verfahren nach einem der vorangehenden Ansprüche, wobei bei der Bildung der Referenz- und/oder Gegenstands-Glättungsbilder ($G_1$, $G_2$, $H_1$, $H_2$) die Umgebungen und/oder die Gewichte der jeweiligen Glättungsfilter ($g_1$, $g_2$), insbesondere aufgrund von Kontextwissen, so gewählt werden, dass das oder die Referenz-Glättungsbild(er) ($G_1$, $H_1$) und das oder die Gegenstands-Glättungsbild(er) ($G_2$, $H_2$), dieselbe Bildschärfe oder im Wesentlichen dieselbe Bildschärfe aufweisen.

**7.** Verfahren nach einem der vorangehenden Ansprüche, wobei für den Fall, dass mehrere Fehlerbilder ($F_1$, ..., $F_4$) gebildet werden, die bei der Erstellung von Referenz- und/oder Gegenstands-Erosionsbildern ($E_1$, $E_2$) und/oder Referenz- und/oder Gegenstands-Dilationsbildern ($D_1$, $D_2$) verwendeten Filter jeweils dieselbe Pixelumgebung aufweisen.

**8.** Verfahren nach einem der vorangehenden Ansprüche,

- wobei eine Vielzahl von oberen Referenz-Glättungsbildern ($H_{1,1}$, ..., $H_{1,l}$) durch Anwendung von Referenz-Glättungsfiltern ($g_{1,1}$, ..., $g_{1,l}$) mit unterschiedlicher Glättungsstärke auf das Referenz-Maximalbild (V) erstellt wird und das obere Referenz-Schrankenbild ($A_1$) als pixelweises Maximum des Referenz-Maximalbilds (V) und aller oberen Referenz-Glättungsbilder ($H_{1,1}$, ..., $H_{1,l}$) gebildet wird, und/oder
- wobei eine Vielzahl von unteren Referenz-Glättungsbildern ($G_{1,1}$, ..., $G_{1,l}$) durch Anwendung von Referenz-Glättungsfiltern ($g_{1,1}$, ..., $g_{1,l}$) mit unterschiedlicher Glättungsstärke auf das Referenz-Minimalbild (U) erstellt wird und das untere Referenz-Schrankenbild ($I_1$) als pixelweises Minimum des Referenz-Minimalbilds (U) und aller unteren Referenz-Glättungsbilder ($G_{1,1}$, ..., $G_{1,l}$) gebildet wird.

**9.** Verfahren nach einem der vorangehenden Ansprüche, wobei bei der Bildung der Referenz- und/oder Gegenstands-Glättungsbilder ($G_1$, $G_2$, $H_1$, $H_2$) die Umgebungen und/oder die Gewichte der jeweiligen Glättungsfilter ($g_1$, $g_2$) so gewählt werden, dass

- das oder die Referenz-Glättungsbild(er) ($G_1$, $H_1$) die minimal zu erwartende und/oder tolerierende Bildschärfe des Gegenstandsbildes (B) erreichen und/oder
- die Gegenstands-Glättungsbild(er) ($G_2$, $H_2$) auch bei maximal zu erwartender und/oder tolerierender Bildschärfe des Gegenstandsbildes (B), die Bildschärfe der Referenzbilder ($R_1$, ..., $R_n$) erreichen oder unterschreiten.

**Claims**

1. Method for checking an object,

   a) wherein an object image (B) is created containing an image of the object,
   b) wherein at least one reference image (R; $R_1$, ..., $R_n$) is specified, which contains an image to be matched with the image of the object,
   c) wherein a reference maximum image (V) and/or a reference minimum image (U) is formed based on the at least one reference image (R), in particular by pixelwise formation of the minimum and/or maximum of a plurality of reference images ($R_1$, ..., $R_n$), wherein in the case that only one reference image (R) is available, the reference maximum image (V) and/or the reference minimum image (U) is/are equated to the reference image (R),
   **characterised in that**
   d) at least one of the following error images ($F_1$, ..., $F_4$) is determined on the basis of the images to be determined in step e):

   - a first error image ($F_1=I_1-D_2$) by pixelwise subtraction of an object dilation image ($D_2$) from a lower reference boundary image ($I_1$),
   - a second error image ($F_2=E_2-A_1$) by pixelwise subtraction of an upper reference boundary image ($A_1$) from an object erosion image ($E_2$),
   - a third error image ($F_3=I_2-D_1$) by pixelwise subtraction of a reference dilation image ($D_1$) from a lower object boundary image ($I_2$),
   - a fourth error image ($F_4=E_1-A_2$) by pixelwise subtraction of an upper object boundary image ($A_2$) from a reference erosion image ($E_1$), and

   e) wherein

   - the reference dilation image ($D_1$) is generated by applying a reference dilation filter ($d_1$) to the upper reference boundary image ($A_1$);
   - the reference erosion image ($E_1$) is generated by applying a reference erosion filter ($e_1$) to the lower reference boundary image ($I_1$),
   - the object dilation image ($D_2$) is generated by applying an object dilation filter ($d_2$) to the object upper boundary image ($A_2$);
   - the object erosion image ($E_2$) is generated by applying an object erosion filter ($e_2$) to the lower object boundary image ($I_2$),

   f) wherein

   - the upper reference boundary image ($A_1$) is created as a pixelwise maximum of the reference maximum image (V) and an upper reference smoothing image ($H_1$),
   - the lower reference boundary image ($I_1$) is created as a pixelwise minimum of the reference minimum image (U) and of a lower reference smoothing image ($G_1$),
   - the upper object boundary image ($A_2$) is set

       - as identical to the object image (B), or
       - as a pixelwise maximum of the object image (B) and of an object smoothing image ($G_2$),

   - the lower object boundary image ($I_2$) is set

       - as identical to the object image (B), or
       - as a pixelwise minimum of the object image (B) and of an object smoothing image ($G_2$),

g) wherein

- the upper reference smoothing image ($H_1$) is formed by applying a reference smoothing filter ($g_1$) to the reference maximum image (V),
- the lower reference smoothing image ($G_1$) is formed by applying the reference smoothing filter ($g_1$) to the reference minimum image (U),
- the object smoothing image ($G_2$) is formed by applying an object smoothing filter ($g_2$) to the object image (B), and

h) wherein areas of the object are considered potentially defective when mapped to those image areas of one of the detected error images ($F_1$, ..., $F_4$) in which the respective pixel error value has a positive value or a value exceeding a positive threshold value.

2. Method according to claim 1, wherein in step d) at least two of the error images ($F_1$, ..., $F_4$) are formed and a maximum error image ($F_{max}$) is determined by pixelwise maximum formation of the error images ($F_1$, ..., $F_4$) created in step d), and wherein areas of the object are considered potentially defective when mapped to image areas of the maximum error image ($F_{max}$) in which the respective pixel error values have a positive value or a value exceeding a positive threshold value.

3. Method according to claim 1 or 2, wherein for the comparison only partial areas of the object image (B) are used, which are in particular located at predetermined positions of the object image (B).

4. Method according to any one of claims 1 to 3, wherein the single- or multi-channel reference images ($R_1$, ..., $R_n$) and the single- or multi-channel object image (B) is formed by

- a raw image of the object being determined and each image channel being created by applying one or more of the following operations to the raw image:

i. by applying filters, in particular an edge filter, to the raw image, and/or
ii. by applying image channel blending operations to a multi-channel raw image to create a single-channel image.

5. Method according to claim 4, wherein

- the reference images ($R_1$, ..., $R_n$) and the object image (B) contain a plurality of channels (m) and for each image channel (i) individually at least one of the following images is created according to step d) and e) of claim 1,

- an upper reference boundary image ($A_{1,i}$),
- a lower reference boundary image ($I_{1,i}$),
- a reference dilation image ($D_{1,i}$),
- a reference erosion image ($E_{1,i}$),

- the object image (B) contains a plurality of channels (m), and for each image channel (i) at least one of the following images is created according to step f) of claim 1:

- an upper object boundary image ($A_{2,i}$),
- a lower object boundary image ($I_{2,i}$),
- an object dilation image ($D_{2,i}$),
- an object erosion image ($E_{2,i}$),

- wherein for at least two channels, in particular for all channels, at least one error image ($F_{1,1}$, ..., $F_{4,1}$; ...; $F_{1,m}$, ..., $F_{4,m}$) is created according to step g), and one maximum error image ($F_{max}$) is determined by pixelwise maximum formation of the error images ($F_{1,1}$, ..., $F_{4,1}$; ... ; $F_{1,m}$, ..., $F_{4,m}$).

6. Method according to any one of the preceding claims, wherein in the formation of the reference and/or object smoothing images ($G_1$, $G_2$, $H_1$, $H_2$) the surroundings and/or the weights of the respective smoothing filters ($g_1$, $g_2$), in particular based on contextual knowledge, may be chosen such that the reference smoothing image(s) ($G_1$, $H_1$) and the object smoothing image(s) ($G_2$, $H_2$), exhibit the same image sharpness or substantially the same image sharpness.

7. Method according to any one of the preceding claims, wherein in the case that a plurality of error images ($F_1$, ..., $F_4$) are formed, the filters used in the creation of reference and/or object erosion images ($E_1$, $E_2$) and/or reference and/or object dilation images ($D_1$, $D_2$) have respectively the same pixel surroundings.

8. Method according to any one of the preceding claims,

- wherein a plurality of upper reference smoothing images ($H_{1,1}$, ..., $H_{1,l}$) is created by applying reference smoothing filters ($g_{1,1}$, ..., $g_{1,l}$) with different degrees of smoothing to the reference maximum image (V), and the upper reference boundary image ($A_1$) is formed as pixelwise maximum of the reference maximum image (V) and all upper reference smoothing images ($H_{1,1}$, ..., $H_{1,l}$), and/or
- wherein a plurality of lower reference smoothing images ($G_{1,1}$, ..., $G_{1,l}$) is created by applying reference smoothing filters ($g_{1,1}$, ..., $g_{1,l}$) with different degrees of smoothing to the reference minimum image (U), and the lower reference boundary image ($I_1$) is formed as a pixelwise minimum of the reference minimum image (U) and all lower reference smoothing images ($G_{1,1}$, ..., $G_{1,l}$).

9. Method according to any one of the preceding claims, wherein in the formation of the reference and/or object smoothing images ($G_1$, $G_2$, $H_1$, $H_2$) the surroundings and/or the weights of the respective smoothing filters ($g_1$, $g_2$) are chosen so that

- the reference smoothing image(s) ($G_1$, $H_1$) achieve(s) the minimum image sharpness of the object image (B) that is to be expected and/or tolerated
- the object smoothing image(s) ($G_2$, $H_2$) achieve(s) or fall(s) below the image sharpness of the reference images ($R_1$, ..., $R_n$) even at maximum image sharpness of the object image (B) that is to be expected and/or tolerated.

## Revendications

1. Procédé servant à vérifier un objet,

   a) dans lequel une image d'objet (B) est créée, qui contient une reproduction de l'objet,
   b) dans lequel est spécifiée au moins une image de référence (R ; $R_1$, ..., $R_n$), qui contient une reproduction, dont la concordance avec la reproduction de l'objet doit être vérifiée,
   c) dans lequel une image maximale de référence (V) et/ou une image minimale de référence (U) sont obtenues sur la base de l'au moins une image de référence (R), en particulier en obtenant pixel par pixel le minimum et/ou le maximum d'une multitude d'images de référence ($R_1$, ..., $R_n$), dans lequel si seulement une image de référence (R) est fournie, l'image maximale de référence (V) et/ou l'image minimale de référence (U) sont assimilées à l'image de référence (R),
   caractérisé en ce
   a) qu'au moins une des images de défaut ($F_1$, ..., $F_4$) suivantes est déterminée sur la base des images à déterminer lors de l'étape e) :

   - une première image de défaut ($F_1$ = $I_1$ - $D_2$) par soustraction pixel par pixel d'une image de dilatation d'objet ($D_2$) d'une image de barrière de référence inférieure ($I_1$),
   - une deuxième image de défaut ($F_2$ = $E_2$ - $A_1$) par soustraction pixel par pixel d'une image de barrière de référence supérieure ($A_1$) d'une image d'érosion d'objet ($E_2$),
   - une troisième image de défaut ($F_3$ = $I_2$ - $D_1$) par soustraction pixel par pixel d'une image de dilatation de référence ($D_1$) d'une image de barrière d'objet inférieure ($I_2$),
   - une quatrième image de défaut ($F_4$ = $E_1$ - $A_2$) par soustraction pixel par pixel d'une image de barrière d'objet supérieure ($A_2$) d'une image d'érosion de référence ($E_1$), et

   e) dans lequel

   - l'image de dilatation de référence ($D_1$) est générée en utilisant un filtre de dilatation de référence ($d_1$) sur l'image de barrière de référence supérieure ($A_1$),
   - l'image d'érosion de référence ($E_1$) est générée en utilisant un filtre d'érosion de référence ($e_1$) sur l'image de barrière de référence inférieure ($I_1$),

13

- l'image de dilatation d'objet ($D_2$) est générée en utilisant un filtre de dilatation d'objet ($d_2$) sur l'image de barrière d'objet supérieure ($A_2$),
- l'image d'érosion d'objet ($E_2$) est générée en utilisant un filtre d'érosion d'objet ($e_2$) sur l'image de barrière d'objet inférieure ($I_2$),

f) dans lequel

- l'image de barrière de référence supérieure ($A_1$) est créée en tant qu'un maximum pixel par pixel de l'image maximale de référence (V) et d'une image de lissage de référence supérieure ($H_1$),
- l'image de barrière de référence inférieure ($I_1$) est créée en tant qu'un minimum pixel par pixel de l'image minimale de référence (U) et d'une image de lissage de référence inférieure ($G_1$),
- l'image de barrière d'objet supérieure ($A_2$) est fixée

- comme étant identique à l'image d'objet (B) ou
- comme étant un maximum pixel par pixel de l'image d'objet (B) ou d'une image de lissage d'objet ($G_2$),

- l'image de barrière d'objet inférieure ($I_2$) est fixée

- comme étant identique à l'image d'objet (B) ou
- comme étant un minimum pixel par pixel de l'image d'objet (B) ou d'une image de lissage d'objet ($G_2$),

g) dans lequel

- l'image de lissage de référence supérieure ($H_1$) est formée en utilisant un filtre de lissage de référence ($g_1$) sur l'image maximale de référence (V),
- l'image de lissage de référence inférieure ($G_1$) est obtenue en utilisant le filtre de lissage de référence ($g_1$) sur l'image minimale de référence (U),
- l'image de lissage d'objet ($G_2$) est obtenue en utilisant un filtre de lissage d'objet ($g_2$) sur l'image d'objet (B), et

h) dans lequel des zones de l'objet sont considérées comme étant potentiellement défectueuses quand elles sont reproduites sur des zones d'image de ce type d'une des images de défaut ($F_1$, ..., $F_4$) déterminées, sur laquelle la valeur de défaut de pixel concernée présente une valeur positive ou une valeur dépassant une valeur de seuil positive.

2. Procédé selon la revendication 1, dans laquelle lors de l'étape d), au moins deux des images de défaut ($F_1$, ..., $F_4$) sont obtenues et une image de défaut maximale ($F_{max}$) est déterminée par l'obtention de maximum pixel par pixel des images de défaut ($F_1$, ..., $F_4$) créées lors de l'étape d), et dans lequel des zones de l'objet sont considérées comme étant potentiellement défectueuses quand elles sont reproduites sur des zones d'image de l'image de défaut maximale ($F_{max}$), dans lesquelles les valeurs de défaut de pixels concernées présentent une valeur positive ou une valeur dépassant une valeur de seuil positive.

3. Procédé selon la revendication 1 ou 2, dans lequel sont prises en compte pour la comparaison exclusivement des zones partielles de l'image d'objet (B), qui se trouvent en particulier au niveau de positions prédéfinies de l'image d'objet (B).

4. Procédé selon l'une quelconque des revendications 1 à 3, dans lequel les images de référence à un canal ou à canaux multiples ($R_1$, ..., $R_n$) et l'image d'objet à un canal ou à canaux multiples (B) sont obtenues en ce que

- une image brute de l'objet est déterminée et chaque canal d'image est créé en utilisant une ou plusieurs des opérations suivantes sur l'image brute :

i) en utilisant des filtres, en particulier un filtre d'arête, sur l'image brute, et/ou
ii) en utilisant des opérations mixtes de canal d'image sur une image brute à canaux multiples pour créer une image à un canal.

5. Procédé selon la revendication 4, dans lequel

- les images de référence ($R_1$, ..., $R_n$) et l'image d'objet (B) contiennent plusieurs canaux (m) et au moins une des images suivantes est individuellement créée selon l'étape d) ou e) issues de la revendication 1 pour chaque canal d'image (i),

    - une image de barrière de référence supérieure ($A_{1,i}$),
    - une image de barrière de référence inférieure ($I_{1,i}$);
    - une image de dilatation de référence ($D_{1,i}$),
    - une image d'érosion de référence ($E_{1,i}$)

- l'image d'objet (B) contient plusieurs canaux (m), et au moins une des images suivantes est créée pour chaque canal d'image (i) selon l'étape f) issue de la revendication 1 :

    - une image de barrière d'objet supérieure ($A_{2,i}$);
    - une image de barrière d'objet inférieure ($I_{2,i}$);
    - une image de dilatation d'objet ($D_{2,i}$),
    - une image d'érosion d'objet ($E_{2,i}$)

- dans lequel au moins une image de défaut ($F_{1,1}$, ..., $F_{4,1}$ ; $F_{1,m}$, ..., $F_{4,m}$) est créée selon l'étape g) pour au moins deux canaux, en particulier pour tous les canaux, et une image de défaut maximale ($F_{max}$) est déterminée par obtention de maximum pixel par pixel des images de défaut ($F_{1,1}$, ..., $F_{4,1}$ ; $F_{1,m}$, ..., $F_{4,m}$) ainsi créées.

**6.** Procédé selon l'une quelconque des revendications précédentes, dans lequel lors de l'obtention des images de lissage de référence et/ou d'objet ($G_1$, $G_2$, $H_1$, $H_2$), les environs et/ou les poids des filtres de lissage ($g_1$, $g_2$) respectifs sont choisis, en particulier en raison des connaissances du contexte, de telle sorte que l'image ou les images de lissage de référence ($G_1$, $H_1$) et l'image ou les images de lissage d'objet ($G_2$, $H_2$) présentent la même netteté d'image ou sensiblement la même netteté d'image.

**7.** Procédé selon l'une quelconque des revendications précédentes, dans lequel si plusieurs images de défaut ($F_1$, ..., $F_4$) sont obtenues, les filtres utilisés lors de la création d'images d'érosion de référence et/ou d'objet ($E_1$, $E_2$) et/ou d'images de dilatation de référence et/ou d'objet ($D_1$, $D_2$) présentent respectivement le même environnement de pixels.

**8.** Procédé selon l'une quelconque des revendications précédentes,

- dans lequel une pluralité d'images de lissage de référence supérieures ($H_{1,1}$, ..., $H_{1,l}$) est créée en utilisant des filtres de lissage de référence ($g_{1,1}$, ..., $g_{1,l}$) avec une intensité de lissage différente sur l'image maximale de référence (V) et l'image de barrière de référence supérieure ($A_1$) est obtenue en tant que maximum pixel par pixel de l'image maximale de référence (V) et de toutes les images de lissage de référence supérieures ($H_{1,1}$, ..., $H_{1,l}$), et/ou
- dans lequel une pluralité d'images de lissage de référence inférieures ($G_{1,1}$, ..., $G_{1,l}$) est créée en utilisant des filtres de lissage de référence ($g_{1,1}$, ..., $g_{1,l}$) avec une intensité de lissage différente sur l'image minimale de référence (U) et l'image de barrière de référence inférieure ($I_1$) est obtenue en tant que minimum pixel par pixel de l'image minimale de référence (U) et de toutes les images de lissage de référence inférieures ($G_{1,1}$, ..., $G_{1,l}$).

**9.** Procédé selon l'une quelconque des revendications précédentes, dans lequel lors de l'obtention des images de lissage de référence et/ou d'objet ($G_1$, $G_2$, $H_1$, $H_2$), les environnements et/ou les poids des filtres de lissage ($g_1$, $g_2$) respectifs sont choisis de telle sorte que

- l'image ou les images de lissage de référence ($G_1$, $H_1$) atteignent la netteté d'image attendue au minimum et/ou tolérée de l'image d'objet (B)
et/ou
- l'image ou les images de lissage d'objet ($G_2$, $H_2$) atteignent ou reste en deçà de la netteté d'image des images de référence ($R_1$, ..., $R_n$) également pour la netteté d'image maximale attendue et/ou tolérée de l'image d'objet (B).

Fig. 1a

Fig. 1b

Fig. 2

Fig. 3a

Fig. 3b

Fig. 4a

Fig. 4b

Fig. 5a

Fig. 5b

Fig. 6

Fig. 7

Fig. 8

Fig. 9

Fig. 10

Fig. 11

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- US 2008130982 A1
- US 6721461 B1
- US 5586058 A